# EUROPÄISCHE PATENTSCHRIFT

(11) **EP 3 021 041 B1**
(45) Veröffentlichungstag und Bekanntmachung des Hinweises auf die Patenterteilung: **22.04.2020**
(21) Anmeldenummer: 15196257.8
(22) Anmeldetag: 12.03.2013
(51) Int. Cl.: F21S 41/00

(54) **LICHTQUELLENMODUL FÜR EINEN FAHRZEUGSCHEINWERFER**
LIGHT SOURCE MODULE FOR A VEHICLE HEADLIGHT
MODULE D'ÉCLAIRAGE POUR PHARE DE VÉHICULE

(30) Priorität: 12.03.2012 AT 500732012
(43) Veröffentlichungstag der Anmeldung: 18.05.2016
(62) Teilanmeldung aus: 13716169.1
(73) Patentinhaber: ZKW Group GmbH, 3250 Wieselburg (AT)
(72) Erfinder: Bauer, Friedrich, 3252 Bergland (AT); Moser, Andreas, 4320 Perg (AT); Altmann, Johann, 3950 Gmünd (AT); Kaufmann, Erich, Linz 4020 (AT); Jackl, Christian, 3250 Wieselburg (AT)
(74) Vertreter: Patentanwaltskanzlei Matschnig & Forsthuber OG

(56) Entgegenhaltungen:
- WO-A1-2009/115976
- JP-A- 2006 073 202
- JP-A- 2011 054 759
- JP-A- 2012 009 712
- US-A1- 2005 105 301
- US-A1- 2005 134 527
- US-A1- 2011 148 280
- US-A1- 2012 051 377
- US-A1- 2012 212 931

## Beschreibung

Die Erfindung betrifft ein Lichtquellenmodul für einen Fahrzeugscheinwerfer, wobei das Lichtquellenmodul zumindest eine Laserlichtquelle und zumindest ein durch Beleuchtung mit Laserlicht zur Ausstrahlung von sichtbarem Licht anregbares Leuchtelement, das durch die Laserlichtquelle bestrahlbar ist, aufweist, wobei die Laserlichtquelle und das Leuchtelement zueinander beabstandet; auf einem Trägerelement angeordnet sind. Die Erfindung betrifft des Weiteren einen Fahrzeugscheinwerfer mit zumindest einem derartigen Lichtquellenmodul.

Im Stand der Technik sind verschiedene Arten von Fahrzeugscheinwerfern bekannt, in die Lichtquellenmodule mit beispielsweise Entladungslampen oder Halogenlichtquellen eingebracht und befestigt werden können. Dazu sind üblicherweise entsprechende Aufnahmen in den Reflektoren oder Reflektoradaptern vorgesehen.

Die heute üblichen Lichtquellenmodule enthalten jeweils eine Lichtquelle und eine Zündvorrichtung, die eine gemeinsame Baugruppe bilden und daher leicht und reproduzierbar montiert bzw. im Fall einer Fehlfunktion einfach getauscht werden können. Dabei ist sichergestellt, dass sich bei Einsetzen eines neuen Lichtquellenmoduls die Lichtquelle wieder an der richtigen Stelle - z.B. hinsichtlich des Reflektors - befindet.

Aus Energiespargründen und um den Platzbedarf von Fahrzeugscheinwerfern zu verringern wird zunehmend der Einsatz von Laserlichtquellen wie Halbleiterlasern erprobt, da diese diesbezüglich von Vorteil sind. Um das Laserlicht für einen Fahrzeugscheinwerfer nutzbar zu machen wird dabei mit einer Laserlichtquelle ein Leuchtelement, ein sog. Phosphor, bestrahlt, der dadurch zur Abstrahlung von sichtbarem Licht angeregt wird. Derartige Lösungen zeigen US 2011/0157865 A1, US 2011/0194302 A1 und US 2011/0280033 A1.

Aus der US 2012/0051377 A1 geht eine Lichtquellenanordnung hervor, die ein Lichtleitelement mit einer Eintrittsstelle für das Licht einer Laserdiode. Die Oberfläche des Lichtleitelements ist mit mikroskopischen Unebenheiten versehen und die Außenfläche zum Teil mit einem Phosphor enthaltenden Belag und zum Teil mit einer reflektierenden Schicht. Das von der Laserdiode durch eine Öffnung eintretende Laserlicht wird gestreut und in der Phosphorschicht zwingend in sichtbares Licht umgewandelt, um das angestrebte Ziel zu erreichen, dass keinesfalls Laserlicht nach außen gelangen kann.

Kundenwünschen entsprechend soll einem Fahrzeugscheinwerfer neben seiner eigentlichen Funktion - der Fahrbahnausleuchtung - auch immer mehr eine Designfunktion auch im Sinne besonderer Lichteffekte zukommen.

Es ist eine Aufgabe der Erfindung, ein Lichtquellenmodul bereit zu stellen, bei welchem eine solche Designfunktion ohne besonderen zusätzlichen Aufwand erzielbar ist.

Diese Aufgabe wird mit einem eingangs erwähnten Lichtquellenmodul erfindungsgemäß dadurch gelöst, dass zwischen der Laserlichtquelle und dem Leuchtelement zumindest ein Lichtleitelement angeordnet ist, in dem Licht von der Laserlichtquelle zu dem Leuchtelement geführt wird und in bzw. auf dem Lichtleitelement das Laserlicht streuende Unregelmäßigkeiten vorgesehen sind, welche gestreutes Laserlicht von außen sichtbar machen.

Dieses Lichtleitelement besteht dabei aus einem lichtleitendem Material, beispielsweise Kunststoff (z.B. Plexiglas), und kann beliebig ausgeformt sein, beispielsweise röhren-, kegel- oder zylinderförmig. Auch eine Ausführung als trichterförmiges Konzentratorelement, beispielsweise aus Glas, ist möglich. Das Lichtleitelement kann auch mit Unregelmäßigkeiten (Mikrostrukturen, Aufrauhungen an der Oberfläche, Streukörper im Inneren, etc.) versehen sein, die das Laserlicht ablenken und so ein Leuchten des Lichtleitelements bewirken, was als Designelement verwendbar ist. Beispielsweise kann bei Verwendung einer blauen Laserlichtquelle derart ein blaues Leuchten erzeugt werden.

In einer Variante der Erfindung ist das Leuchtelement derart angeordnet, dass es im montierten Zustand in einem Brennpunkt eines Reflektors des Fahrzeugscheinwerfers anordenbar ist. Damit ist eine optimale Ausnutzung des vom Leuchtelement ausgestrahlten Lichts sichergestellt.

Eine Variante sieht vor, dass das Lichtquellenmodul an einem Trägerelement angeordnete Mittel zur lösbaren Montage in dem Fahrzeugscheinwerfer aufweist. Dies ermöglicht eine standardisierte Laserlichtquelle für Fahrzeugscheinwerfer, wobei durch die gemeinsame Anordnung von Laserlichtquelle und Leuchtelement auf einem Trägerelement die Positioniergenauigkeit zwischen Laserlichtquelle und Leuchtelement sichergestellt ist.

Das Lichtquellenmodul kann wie herkömmliche Module in Richtung der optischen Achse eines Fahrzeugscheinwerfers bzw. dessen Reflektors von hinten eingefügt werden. Dadurch ist auch ein leichter Einbau bzw. Austausch möglich, wobei dabei die reproduzierbare Positionierung insbesondere des Leuchtelements innerhalb des Fahrzeugscheinwerfers sichergestellt ist. Diese Austauschbarkeit ergibt eine ressourcenschonende, wirtschaftliche Handlungsmöglichkeit, zumal nicht, wie dies nach dem Stand der Technik zu vermuten ist, im Falle eines Defekts der gesamte Scheinwerfer, sondern lediglich das Lichtquellenmodul ausgetauscht werden muss. Auch können so routinemäßige Kontrollen, z.B. des Phosphors, einfacher durchgeführt werden.

Als Laserlichtquelle können beispielsweise Halbleiterlaser bzw. Laserdioden bekannter Art verwendet werden, wobei die Wellenlänge des abgestrahlten Lichts im Bereich von 200 nm bis 450 nm liegt. Beispielsweise kann es sich auch um ein Lichtquellenarray mit mehreren Lichtquellen, insbesondere Laserdioden, handeln. Dabei kann eine Farbabstimmung zwischen den verschiedenen Lichtquellen vorgesehen werden. Bei dem Lichtelement handelt es sich beispielsweise um einen beliebigen Phosphor-Konverter, wobei allen diesen Materialien gemein ist, dass sie mit Laserlicht zur Emission von sichtbarem Licht insbesondere weißer Farbe anregbar sind.

Das Trägerelement kann beliebig ausgeführt sein, beispielsweise aus Kunststoff. Günstigerweise ist das Trägerelement aus einem wärmeleitenden Material und/oder zumindest teilweise aus einem transparenten Material gefertigt. Dabei können verschiedene gebräuchliche Materialien verwendet werden, beispielsweise kann das Trägerelement in "Alu-Druckguß" oder als ein eine Heatpipe umfassender Kühlkörper bekannter Art realisiert werden. Möglich sind auch verschiedene Metalle, metallische Legierungen oder anthrazit- bzw. graphithältige Polymere. Das Material bzw. die Ausführung ist so zu wählen, dass ein Wärmeabtransport vom Leuchtelement weg gewährleistet ist.

Über das Trägerelement kann so die während des Betriebs der Laserlichtquelle bzw. des Leuchtelements entstehende Wärme abgeleitet werden. Die Abwärme kann dabei durchaus beträchtlich sein, da Laserlichtquellen mit Leistungen von derzeit bis zu 3 W verwendet werden, wobei ein Teil der Leistung in Form von Wärme abgegeben wird. Die Wärmeableitung ist von Vorteil, da die Abstrahlungscharakteristik einer Laserdiode, wie sie hier zum Einsatz kommt, im Gegensatz zu LEDs stark von der Temperatur abhängig ist.

Bei Ausführung des Trägerelements zumindest teilweise aus einem transparenten Material kann in Kombination mit im Trägerelement oder an dessen Oberfläche ausgeführten Unregelmäßigkeiten (Mikrostrukturen, Materialeinschlüsse, o.ä.) das eingestrahlte Laserlicht oder das vom Leuchtelement stammende Licht abgelenkt und damit sichtbar gemacht werden. Laser-Licht, welches unkollimiert die Laserlichtquelle verlässt, wird im transparenten Teil des Trägerelements gestreut und gespiegelt, damit das Licht außerhalb des Fahrzeugscheinwerfers wahrgenommen werden kann. Beispielsweise kann so bei Verwendung einer blauen Laserlichtquelle ein die Augen nicht gefährdendes blaues Leuchten erzeugt werden, das als Designelement eingesetzt werden kann.

Vorteilhafterweise weist das Lichtquellenmodul Rastelemente auf, die mit korrespondierenden Rastaufnahmen wechselwirken, wobei jeweils die Rastelemente am Lichtquellenmodul und die Rastaufnahmen am Fahrzeugscheinwerfer (z.B. im Reflektor bzw. Reflektoradapter) oder umgekehrt angeordnet sein können. Möglich sind auch Nut-Feder-Kombinationen, über die das Lichtquellenmodul in einen Fahrzeugscheinwerfer eingeschoben werden kann. Derartige Mittel zur lösbaren Montage sind dem Fachmann bekannt und werden deshalb hier nicht weiter ausgeführt. Damit lässt sich das erfindungsgemäße Lichtquellenmodul wie herkömmliche Module in einem Fahrzeugscheinwerfer bzw. dessen Reflektor oder Reflektoradapter montieren.

Vorteilhafterweise weisen das Lichtquellenmodul und/oder die Laserlichtquelle Referenzmittel zum Referenzieren des Lichtquellenmoduls und/oder der Laserlichtquelle in einem Fahrzeugscheinwerfer, insbesondere einem Reflektor eines Fahrzeugscheinwerfers, auf. Damit kann sichergestellt werden, dass beim Verbauen des Lichtquellenmoduls in einen Scheinwerfer die optimale Positionierung des Moduls bzw. dessen Leuchtelements reproduzierbar ist.

In einer Variante der Erfindung sind die Referenzmittel als mit entsprechenden Führungsaufnahmevorrichtungen eines Fahrzeugscheinwerfers, insbesondere eines Reflektors eines Fahrzeugscheinwerfers, zusammenwirkende Führungsvorrichtungen ausgeführt.

In noch einer weiteren Variante der Erfindung sind die Referenzmittel als zumindest ein Passstift und zumindest ein Passloch ausgeführt, wobei der Passstift auf der Laserlichtquelle und/oder dem Trägerelement angeordnet sind und das Passloch auf einem Fahrzeugscheinwerfer angeordnet ist, oder umgekehrt.

In einer Variante der Erfindung ist das Leuchtelement in einem vorzugsweise auf einem Trägerelement angeordneten Optikelement, bevorzugt in einem Sackloch oder in einer Höhlung, angeordnet, wobei dem Optikelement zumindest auf einer von der Laserlichtquelle abgewandten Seite zumindest eine, Licht in Richtung der Laserlichtquelle reflektierende Reflexionsschicht und/oder zumindest eine lichtundurchlässige Absorptionsschicht zugeordnet ist. Die Reflexionsschicht und/oder die lichtundurchlässige Absorptionsschicht sind bevorzugt direkt auf dem Optikelement angebracht. Das Optikelement weist also eine Aufnahme für das Leuchtelement und eine Reflexionsschicht und/oder Absorptionsschicht in einem gemeinsamen Bauteil auf.

Neben der Ausführung als Sackloch kann die Ausnehmung auch als Höhlung, also allseitig vom Optikelement umschlossen, ausgeführt sein. Dadurch wird das Leuchtelement vor Umgebungseinflüssen geschützt. Das Optikelement kann beispielsweise aus Glas oder transparentem Kunststoff ausgeführt sein, damit das Licht der Laserlichtquelle auf das Leuchtelement treffen kann. Bei Vorsehen einer lichtundurchlässigen Beschichtung wirkt das Optikelement (genau so wie das Konzentratoroptikelement) als Abdeckkappe für das Laserlicht und das vom Leuchtelement ausgestrahlte Licht. Diese lichtundurchlässige Beschichtung kann beispielsweise auch für Designzwecke verwendet werden, z.B. um Herstellerlogos zu platzieren.

Das Optikelement bzw. das Konzentratoroptikelement können als Freiformfläche mit zumindest einem Brennpunkt ausgeführt sein. Damit haben auch die darauf aufgebrachten reflektierenden Schichten bzw. die Reflexionsschicht die Form einer Freiformfläche mit dem entsprechenden Reflexionsverhalten. Das konvertierte Licht wird vorgeformt. Damit kann das Licht des Leuchtelements, das in Richtung der Hauptabstrahlrichtung des Fahrzeugscheinwerfers abgestrahlt wird, noch besser nutzbar gemacht werden.

Um die beim Betrieb der Laserlichtquelle entstehende Abwärme abzuleiten, ist vorteilhafterweise die Laserlichtquelle mit zumindest einem, vorzugsweise auf dem Trägerelement angeordneten Kühlelement verbunden, das insbesondere als Kühlkörper und/oder Belüftungsvorrichtung ausgeführt ist. Das Kühlelement kann beispielsweise als Wasserkühlung, Ventilatoreinheit oder Heatpipe ausgeführt sein, möglich ist aber auch eine Ausführung beispielsweise mit Kühlrippen. In einer Variante ist das Trägerelement wie oben beschrieben wärmeleitend ausgeführt, so dass in Kombination mit dem gerade beschriebenen Kühlelement eine besonders effiziente Ableitung der durch das Lichtquellenmodul produzierten Abwärme sichergestellt ist.

In einer Variante der Erfindung weist das Lichtquellenmodul zumindest eine Sicherheitsschaltvorrichtung auf, die ein Aktivieren des Lichtquellenmoduls bzw. der Laserlichtquelle des Lichtquellenmoduls vor erfolgtem Einbau des Lichtquellenmoduls in einen Fahrzeugscheinwerfer unterbindet. Dabei kann es sich beispielsweise um einen Kontaktschalter handeln, der die Inbetriebnahme der Laserlichtquelle erst in korrekter Position im Fahrzeugscheinwerfer bzw. im Reflektor eines Fahrzeugscheinwerfers freigibt. Eine weitere Möglichkeit sind ein Kodier-Widerstand oder eine Brücke welche im Kabelstrang oder in die lichttechnische Einheit integriert sein kann (mechanisch und/oder elektronisch) und die Inbetriebnahme erst freigibt, wenn der Scheinwerfer oder das Lichtmodul im Fahrzeug verbaut sind.

Die Aufgabe der Erfindung wird weiters durch einen eingangs erwähnten Fahrzeugscheinwerfer mit zumindest einem Lichtquellenmodul nach einer der oben beschriebenen Varianten gelöst. In einer Variante der Erfindung ist zumindest ein Reflektor oder Reflektoradapter mit zumindest einer Aufnahme für das Lichtquellenmodul vorgesehen. Der derart ausgeführte Fahrzeugscheinwerfer ist dazu geeignet, die gesetzlichen Bestimmungen der ECE, SAE, CCC, usw. zu erfüllen.

Im Folgenden wird die Erfindung anhand eines nicht einschränkenden Ausführungsbeispiels, das in der Zeichnung dargestellt ist, näher erläutert. In dieser zeigt schematisch:
Fig. 1 eine Seitenansicht einer ersten Variante des erfindungsgemäßen Lichtquellenmoduls; und
Fig. 2 eine seitliche Schnittansicht eines Fahrzeugscheinwerfers mit einem Lichtquellenmodul gemäß Fig. 1, jedoch ohne Lichtleitelement.

Aus Gründen der Übersichtlichkeit sind gleiche Elemente in den verschiedenen Figuren jeweils mit demselben Bezugszeichen bezeichnet.

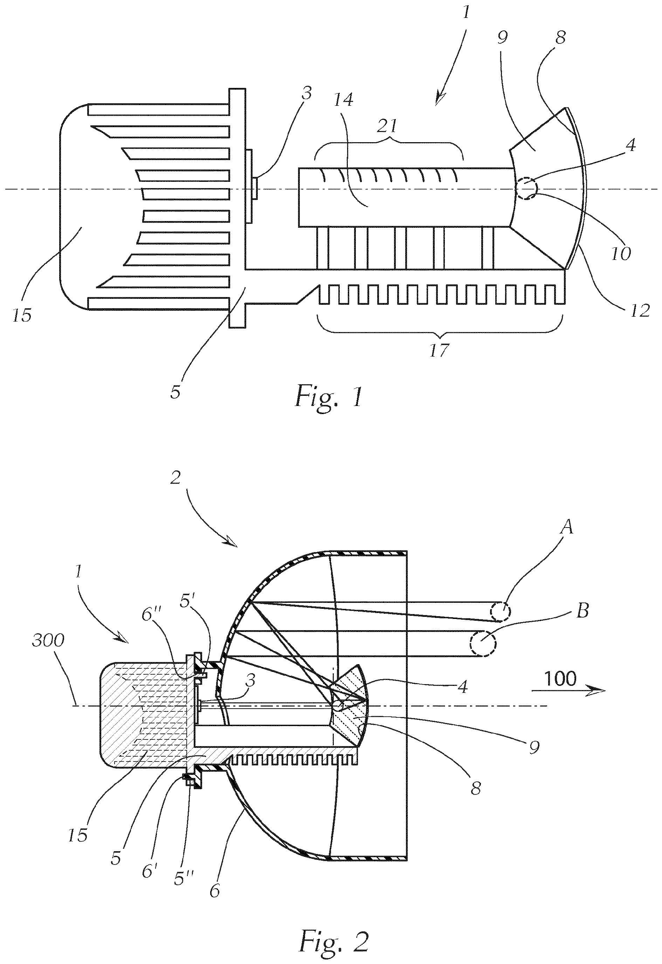

Fig. 1 zeigt ein erfindungsgemäßes Lichtquellenmodul 1, wobei eine Laserlichtquelle 3 und ein beabstandet angeordnetes Leuchtelement 4, das in einem Optikelement 9 gehalten ist, auf einem Trägerelement 5 angeordnet sind. Bei der Laserlichtquelle 3 handelt es sich beispielsweise um einen Halbleiterlaser in Form einer Laserdiode bzw. um ein Lichtquellenarray mit mehreren Laserdioden inkl. der notwendigen Ansteuerelektronik und Verkabelung. Beim Vorsehen mehrerer Laserlichtquellen können diese beispielsweise farbabgestimmt sein.

Zwischen der Laserlichtquelle 3 und dem Leuchtelement 4 ist ein Lichtleitelement 14 angeordnet ist. Dies stellt eine Alternative zu einem möglichen Freistrahlkonzept ohne Lichtleitelement dar. Hier wird das Laserlicht in dem Lichtleitelement 14 von der Laserlichtquelle 3 zum Leuchtelement 4 geführt. Das Lichtleitelement 14 besteht aus einem lichtleitendem Material, beispielsweise Kunststoff oder Plexiglas, und kann beliebig ausgeformt sein, beispielsweise röhren-, halbröhren- (in Form einer Halfpipe), kegel- oder zylinderförmig. Auch eine Ausführung als trichterförmiges Konzentratorelement, beispielsweise aus Glas, ist möglich.

In bzw. auf dem Lichtleitelement 14 sind Unregelmäßigkeiten, wie Mikrostrukturen oder Störkörper, im Elementinneren vorgesehen, die das Laserlicht streuen und so von außen sichtbar machen. Beispielhaft zeigt Fig. 1 Wellenstrukturen 21 auf der Oberseite des Lichtleitelements 14. Je nach geplantem Einsatzgebiet kann das Lichtquellenmodul so gestalterisch bzw. als Designelement verwendet werden. Beispielsweise kann bei Verwendung einer zusätzlichen färbigen, beispielsweise blauen, Laserlichtquelle oder LED, die auf die Mikrostrukturen gerichtet ist, ein blaues Leuchten erzeugt werden.

Das Trägerelement 5 ist aus einem wärmeleitenden Material bekannter Art gefertigt (z.B. als Kühlkörper, umfassend eine Heatpipe), führt also die beim Betrieb von Laserlichtquelle 3 und Leuchtelement 4 entstehende Wärme ab. Das Trägerelement 5 kann beispielsweise in "Alu-Druckguß" oder als eine Heatpipe umfassender Kühlkörper bekannter Art realisiert werden. Möglich sind auch verschiedene Metalle, metallische Legierungen oder anthrazit- bzw. graphithältige Polymere. Möglich ist auch eine Variante, bei der das Trägerelement 5 aus Glasmaterial ausgeformt ist und eingebettete Metallbänder (z.B. Kupfer) zur Wärmeleitung enthält.

Zur Unterstützung sind auf der Unterseite des Trägerelements 5 in der Umgebung des Leuchtelements 4 Kühlrippen 17 vorgesehen. Das Trägerelement 5 kann teilweise aus transparentem Material gefertigt sein, das Unregelmäßigkeiten wie Mikrostrukturen, Aufrauhungen oder Streukörper in seinem Inneren aufweist. Dadurch wird Licht, das die Laserlichtquelle 3 oder das Leuchtelement 4 verlässt, gespiegelt und gestreut und so von außen sichtbar gemacht, was als Designelement verwendet werden kann.

Zur Wärmeabführung ist die Laserlichtquelle 3 mit einem Kühlelement 15 verbunden. Das Kühlelement 15 dient zur zusätzlichen Abführung der beim Betrieb der Laserlichtquelle 3 entstehenden Wärme. Das Kühlelement 15 ist auf dem Trägerelement 5 angeordnet, bzw. mit diesem verbunden. Durch die einstückige Ausführung von Kühlelement 15 und Trägerelement 5 ist eine optimale Wärmeübertragung gegeben. Das Kühlelement 15 ist als Kühlkörper oder als Belüftungsvorrichtung ausgeführt, dient also entweder rein zum Abführen von Wärme, beispielsweise durch Oberflächenvergrößerung mittels Kühlrippen, oder es wird der Laserlichtquelle 3 aktiv ein Kühlmedium zugeführt, beispielsweise durch Wasserkühlung oder einen Ventilator.

Das Leuchtelement 4 ist kugelförmig ausgeführt; es handelt sich um einen Phosphor-Konverter, der durch Bestrahlung mit Laserlicht zur Abstrahlung von sichtbarem, bevorzugt weißem Licht angeregt wird. Das Leuchtelement 4 spendet also funktionsgemäß weißes Licht. Die kugelförmige Ausführung ist nur eine von mehreren Varianten, das Leuchtelement 4 zu gestalten.

Das Optikelement 9 ist aus einem überwiegend transparenten Material wie Glas oder Kunststoff ausgeführt und weist eine Aufnahme für das Leuchtelements 4 auf, beispielsweise ein Sackloch 10 oder eine allseitig von dem Optikelement 9 umschlossene Höhlung. Dadurch ist das Leuchtelement 4 gegen Umwelteinflüsse geschützt.

Dem Leuchtelement 4 ist auf einer von der Laserlichtquelle 3 abgewandten Seite zumindest eine reflektierende Reflexionsschicht 8 zugeordnet. Die Reflexionsschicht 8 ist auf der von der Laserlichtquelle 3 abgewandten Seite des Optikelements 9 als Beschichtung ausgeführt. Die Beschichtung erfolgt beispielsweise durch Aufdampfen, Lackieren oder Befestigen eines separaten Reflexionselements. Die Reflexionsschicht 8 reflektiert Licht in Richtung der Laserlichtquelle 3. Damit wird vom Leuchtelement 4 in von der Laserlichtquelle abgewandter Richtung ausgestrahltes Licht nutzbar gemacht und gleichzeitig optisch vorgeformt. Auf der Reflexionsschicht 8 ist des Weiteren eine lichtundurchlässige Absorptionsschicht 12 aufgebracht. Diese Absorptionsschicht 12 dient als Schutz, um bei Durchstrahlen der Reflexionsschicht 8 (z.B., wenn diese produktionsbedingt an manchen Stellen zu dünn ausgeführt ist) ein Austreten von Laserstrahlung oder von weißem Licht zu verhindern. In einer Variante der Erfindung kann auch nur eine Absorptionsschicht 12 vorgesehen sein - in diesem Fall wird das Licht nicht optisch vorgeformt und in Richtung der Laserlichtquelle 3 reflektiert, sondern nur abgeschirmt.

Je nach Ausführung der von der Laserlichtquelle 3 abgewandten Seite des Optikelements 9 und der Reflexionsschicht 8 können verschiedene Lichtfunktionen realisiert werden. Beispielsweise kann die von der Laserlichtquelle 3 abgewandte Seite des Optikelements 9 (also die Außenfläche) derart ausgeführt sein, dass sie zumindest einen Brennpunkt aufweist und die als Sackloch 10 ausgeführte Aufnahme so angeordnet ist, dass das Leuchtelement 4 bei Einbringung in die Aufnahme in einem dieser Brennpunkte bzw. in dessen Nähe zu liegen kommt. Dazu ist besagte Außenfläche des Optikelements 9 (und damit auch die Reflexionsschicht 8 bevorzugt als Freiformfläche ausgeführt. Das Ausführen einer Freiformfläche ist dem Fachmann bekannt.

In einer Variante ist die Außenfläche und damit die darauf aufgebrachte Reflexionsschicht 9 so ausgeführt, dass Licht oberhalb, unterhalb und seitlich im Umkreis des Leuchtelements 4 reflektiert wird und derart quasi zu einer Vergrößerung der Lichtquelle bzw. des Leuchtelements 4 beiträgt - das Leuchtelement 4 ist in dieser Variante quasi von einem Lichtring an reflektiertem Licht umgeben. Die Reflexionsschicht 8 leitet also das von ihr reflektierte Licht überwiegend am Leuchtelement vorbei.

Fig. 2 zeigt in Schnittansicht ein Lichtquellenmodul 1, das in einem Fahrzeugscheinwerfer 2 angeordnet ist. Dabei handelt es sich um das Lichtquellenmodul 1 gemäß Fig. 1, allerdings bei weggelassenem Lichtleitelement 14. Der Fahrzeugscheinwerfer 2 weist einen Reflektor 6 auf, in den das Lichtquellenmodul 1 einbringbar ist. Das Lichtquellenmodul 1 ist so ausgeführt, dass im montierten Zustand das Leuchtelement 4 in einem Brennpunkt des Reflektors 6 angeordnet ist. So lässt sich eine optimale Ausnutzung des vom Leuchtelement 4 ausgestrahlten Lichts sicherstellen. Im dargestellten Ausführungsbeispiel ist das Lichtquellenmodul 1 so montiert, dass das der Laserlichtquelle 3 zugeordnete Kühlelement 15 außerhalb des Reflektors 6 angeordnet ist. Da das Kühlelement 15 wärmeleitend mit dem Trägerelement 5 verbunden ist, wird dadurch eine optimale Ableitung der Wärme aus dem Reflektor 6 heraus sichergestellt.

Wie in Fig. 2 erkennbar ist, wird durch die lichtundurchlässige Reflexionsschicht 8 des Optikelements 9 sichergestellt, dass kein Licht in Hauptabstrahlrichtung 100 des Fahrzeugscheinwerfers 2 abgestrahlt wird und auch das Laserlicht nicht in diese Richtung entweichen kann. Dies ist auch sichergestellt, wenn das Leuchtelement 4 nicht mehr an seinem Platz ist. In Fig. 2 ist erkennbar, dass in Hauptabstrahlrichtung 100 des Fahrzeugscheinwerfers 2 Licht sowohl direkt vom Leuchtelement 4 über den Reflektor 6 abgestrahlt wird ("A" in Fig. 2) als auch Licht, das vom Leuchtelement 4 über die Reflexionsschicht 8 des Optikelements 9 zum Reflektor 6 des Fahrzeugscheinwerfers 2 umgelenkt wird ("B" in Fig. 2).

Das Lichtquellenmodul 1 wird entlang der Hauptachse 300 (nur in Fig. 2 dargestellt) des Reflektors 6 eingeführt und mit Mitteln zur lösbaren Montage verankert - dabei kann es sich beispielsweise um Rastelemente handeln, die mit entsprechenden Rastaufnahmen im Reflektor 6 zusammenwirken. Die Mittel zur lösbaren Montage des Lichtquellenmoduls 1 sind bevorzugt an dessen Trägerelement 5 angeordnet. Aus dem Stand der Technik ist eine Vielzahl solcher Lösungen bekannt, die daher hier nicht näher ausgeführt werden.

In Fig. 2 ist weiters gezeigt, dass die Mittel zur lösbaren Montage des Lichtquellenmoduls 1 in dem Scheinwerfer 2 Referenzmittel umfassen kann, die im vorliegenden Ausführungsbeispiel als Passstifte ausgebildet sind, die mit Passlöchern zusammenwirken. Genauer gesagt, sind einerseits an einem mit dem Trägerelement 5 des Lichtquellenmoduls 1 einstückigen Flansch Passstifte 5' und Passlöcher 5" und andererseits an einem Flansch des Reflektors 6 des Scheinwerfers 2 Passlöcher 6" und Passstifte 6' vorhanden. Im vorliegenden Fall ist ein Passstift 5' am Modul 1 bzw. dem Trägerelement 5 und ein Passstift 6' am Scheinwerfer 2 vorgesehen, doch sind selbstverständlich andere Ausführungen möglich, bei welchen z.B. an dem Lichtquellenmodul 1 ausschließlich Passstifte und an dem Scheinwerfer ausschließlich Passlöcher ausgebildet sind bzw. umgekehrt.

Zusätzlich zu den Referenzmitteln, hier den Passstiften und den Passlöchern können natürlich noch weitere Mittel zur lösbaren Montage vorgesehen sein, wie Klammern, Schnappverbindungen etc.

## Patentansprüche

1. Lichtquellenmodul (1) für einen Fahrzeugscheinwerfer (2), wobei das Lichtquellenmodul (1) zumindest eine Laserlichtquelle (3) und zumindest ein durch Beleuchtung mit Laserlicht zur Ausstrahlung von sichtbarem Licht anregbares Leuchtelement (4), das zur Lichtkonversion durch die Laserlichtquelle (3) bestrahlbar ist, aufweist, wobei die Laserlichtquelle (3) und das Leuchtelement (4) zueinander beabstandet auf einem Trägerelement (5) angeordnet sind,
**dadurch gekennzeichnet, dass**
zwischen der Laserlichtquelle (3) und dem Leuchtelement (4) zumindest ein Lichtleitelement (14) angeordnet ist, in dem Licht von der Laserlichtquelle (3) zu dem Leuchtelement (4) geführt wird und in bzw. auf dem Lichtleitelement das Laserlicht streuende Unregelmäßigkeiten (21) vorgesehen sind, welche gestreutes Laserlicht von außen sichtbar machen.

2. Lichtquellenmodul (1) nach Anspruch 1, **dadurch gekennzeichnet, dass** das Lichtleitelement (14) aus leichtleitendem Material, wie Kunststoff oder Glas besteht.

3. Lichtquellenmodul (1) nach Anspruch 1 oder 2, **dadurch gekennzeichnet, dass** das Lichtleitelement (14) Aufrauhungen an der Oberfläche aufweist.

4. Lichtquellenmodul (1) nach einem der Ansprüche 1 bis 3, **dadurch gekennzeichnet, dass** das Lichtleitelement (14) Streukörper im Inneren aufweist.

5. Lichtquellenmodul (1) nach einem der Ansprüche 1 bis 6, **dadurch gekennzeichnet, dass** das Leuchtelement (4) derart angeordnet ist, dass es im montierten Zustand in einem Brennpunkt eines Reflektors (6) des Fahrzeugscheinwerfers (2) anordenbar ist.

6. Lichtquellenmodul (1) nach einem der Ansprüche 1 bis 5, **dadurch gekennzeichnet, dass** das Lichtquellenmodul (1) an einem Trägerelement (5) angeordnete Mittel (5', 6'; 5", 6") zur lösbaren Montage in dem Fahrzeugscheinwerfer (2) aufweist.

7. Lichtquellenmodul (1) nach Anspruch 6, **dadurch gekennzeichnet, dass** die Mittel zur lösbaren Montage Referenzmittel (5', 6'; 5", 6") zum Referenzieren des Lichtquellenmoduls (1) und/oder der Laserlichtquelle (3) in einem Fahrzeugscheinwerfer (2), insbesondere einem Reflektor (6) eines Fahrzeugscheinwerfers (2), umfassen.

8. Lichtquellenmodul (1) nach Anspruch 7, **dadurch gekennzeichnet, dass** die Referenzmittel als mit entsprechenden Führungsaufnahmevorrichtungen in einem Fahrzeugscheinwerfer (2), insbesondere einem Reflektor (6) eines Fahrzeugscheinwerfers (2), zusammenwirkende Führungsvorrichtungen ausgeführt sind.

9. Lichtquellenmodul (1) nach Anspruch 7 oder 8, **dadurch gekennzeichnet, dass** die Referenzmittel als zumindest ein Passstift und zumindest ein Passloch ausgeführt sind, wobei der Passstift auf der Laserlichtquelle (3) und/oder dem Trägerelement (5) angeordnet sind und das Passloch auf einem Fahrzeugscheinwerfer (2) angeordnet ist, oder umgekehrt.

10. Lichtquellenmodul (1) nach einem der Ansprüche 1 bis 9, **dadurch gekennzeichnet, dass** das Trägerelement (5) aus einem wärmeleitenden Material und/oder zumindest teilweise aus einem transparenten Material gefertigt ist.

11. Lichtquellenmodul (1) nach einem der Ansprüche 1 bis 10, **dadurch gekennzeichnet, dass** das Leuchtelement (4) in einem vorzugsweise auf einem Trägerelement (5) angeordneten Optikelement (9), bevorzugt in einem Sackloch (10) oder in einer Höhlung, angeordnet ist, wobei dem Optikelement (9) zumindest auf einer von der Laserlichtquelle (3) abgewandten Seite zumindest eine, Licht in Richtung der Laserlichtquelle (3) reflektierende Reflexionsschicht (8) und/oder zumindest eine lichtundurchlässige Absorptionsschicht (12) zugeordnet ist.

12. Lichtquellenmodul (1) nach einem der Ansprüche 1 bis 11, **dadurch gekennzeichnet, dass** die Laserlichtquelle (3) mit zumindest einem, auf einem Trägerelement (5) angeordneten Kühlelement (15) verbunden ist, das insbesondere als Kühlkörper und/oder Belüftungsvorrichtung ausgeführt ist.

13. Lichtquellenmodul (1) nach einem der Ansprüche 1 bis 12, **dadurch gekennzeichnet, dass** das Lichtquellenmodul (1) zumindest eine Sicherheitsschaltvorrichtung aufweist, die ein Aktivieren des Lichtquellenmoduls (1) bzw. der Laserlichtquelle (3) des Lichtquellenmoduls (1) vor erfolgtem Einbau des Lichtquellenmoduls (1) in einen Fahrzeugscheinwerfer (2) unterbindet.

14. Fahrzeugscheinwerfer (2) mit zumindest einem Lichtquellenmodul (1) nach einem der Ansprüche 1 bis 13.

15. Fahrzeugscheinwerfer (2) nach Anspruch 14, **dadurch gekennzeichnet, dass** zumindest ein Reflektor (6) oder Reflektoradapter mit zumindest einer Aufnahme für das Lichtquellenmodul (1) vorgesehen ist.

## Claims

1. Light source module (1) for a vehicle headlamp (2), the light source module (1) having at least one laser light source (3) and at least one light element (4) which can be excited by illumination with laser light to emit visible light and which can be irradiated by the laser light source (3) for light conversion, the laser light source (3) and the light element (4) being arranged at a distance from one another on a carrier element (5), **characterized in that** at least one light guide element (14) is arranged between the laser light source (3) and the light element (4), in which light is guided from the laser light source (3) to the light element (4) and is guided into or into the light element (4). irregularities (21) are provided on the light guide element, which make scattered laser light visible from the outside.

2. Light source module (1) according to claim 1, **characterised in that** the light guide element (14) consists of easily conductive material, such as plastic or glass.

3. Light source module (1) according to claim 1 or 2, **characterized in that** the light guide element (14) has roughened surfaces.

4. Light source module (1) according to one of claims 1 to 3, **characterized in that** the light guide element (14) has scattering bodies in the interior.

5. Light source module (1) according to one of claims 1 to 6, **characterized in that** the light element (4) is arranged in such a way that in the mounted state it can be arranged in a focal point of a reflector (6) of the vehicle headlamp (2).

6. Light source module (1) according to one of claims 1 to 5, **characterized in that** the light source module (1) has means (5', 6'; 5", 6") arranged on a carrier element (5) for detachable mounting in the vehicle headlamp (2).

7. Light source module (1) according to claim 6, **characterized in that** the means for detachable mounting comprise reference means (5', 6'; 5", 6") for referencing the light source module (1) f and/or the laser light source (3) in a vehicle headlamp (2), in particular a reflector (6) of a vehicle headlamp (2).

8. Light source module (1) according to claim 7, **characterized in that** the reference means are designed as guide means cooperating with corresponding guide receiving means in a vehicle headlamp (2), in particular a reflector (6) of a vehicle headlamp (2).

9. Light source module (1) according to claim 7 or 8, **characterized in that** the reference means are designed as at least one locating pin and at least one fitting hole, the locating pin being arranged on the laser light source (3) and/or the carrier element (5) and the fitting hole being arranged on a vehicle headlamp (2), or vice versa.

10. Light source module (1) according to one of claims 1 to 9, **characterized in that** the carrier element (5) is made of a heat-conducting material and/or at least partially of a transparent material.

11. Light source module (1) according to one of claims 1 to 10, **characterised in that** the light element (4) is arranged in an optical element (9), preferably in a blind hole (10) or in a cavity, preferably arranged on a carrier element (5), wherein at least one reflection layer (8) reflecting light in the direction of the laser light source (3) and/or at least one opaque absorption layer (12) is associated with the optical element (9) at least on a side remote from the laser light source (3).

12. Light source module (1) according to one of claims 1 to 11, **characterised in that** the laser light source (3) is connected to at least one cooling element (15) arranged on a carrier element (5), which is designed in particular as a heat sink and/or ventilation device.

13. Light source module (1) according to one of claims 1 to 12, **characterized in that** the light source module (1) has at least one safety switching device which prevents activation of the light source module (1) or of the laser light source (3) of the light source module (1) before the light source module (1) is installed in a vehicle headlamp (2).

14. Vehicle headlamp (2) having at least one light source module (1) according to one of claims 1 to 13.

15. Vehicle headlamp (2) according to claim 14, **characterized in that** at least one reflector (6) or reflector adapter with at least one receptacle for the light source module (1) is provided.

## Revendications

1. Module de source lumineuse (1) pour un phare de véhicule (2), le module de source lumineuse (1) présentant au moins une source de lumière laser (3) et au moins un élément lumineux (4) qui peut être excité par un éclairage à la lumière laser pour émettre de la lumière visible et qui peut être irradié par la source de lumière laser (3) pour la conversion de la lumière, la source de lumière laser (3) et l'élément lumineux (4) étant disposés à distance l'un de l'autre sur un élément de support (5), **caractérisé en ce qu'**entre la source de lumière laser (3) et l'élément lumineux (4) est disposé au moins un élément de guidage de la lumière (14), dans lequel la lumière est guidée de la source de lumière laser (3) vers l'élément lumineux (4) et est guidée dans ou dans l'élément lumineux (4) des irrégularités (21) sont prévues sur l'élément de guidage de la lumière, qui rendent la lumière laser diffusée visible de l'extérieur.

2. Module de source lumineuse (1) selon la revendication 1, **caractérisé en ce que** l'élément de guidage de la lumière (14) est constitué d'un matériau facilement conducteur, tel que le plastique ou le verre.

3. Module de source lumineuse (1) selon la revendication 1 ou 2, **caractérisé en ce que** l'élément de guidage de la lumière (14) présente des surfaces rugueuses.

4. Module de source lumineuse (1) selon l'une des revendications 1 à 3, **caractérisé en ce que** l'élément de guidage de la lumière (14) présente à l'intérieur des corps diffusants.

5. Module de source lumineuse (1) selon l'une des revendications 1 à 6, **caractérisé en ce que** l'élément lumineux (4) est disposé de telle sorte qu'à l'état monté, il peut être disposé dans un point focal d'un réflecteur (6) du phare (2) du véhicule.

6. Module de source lumineuse (1) selon l'une des revendications 1 à 5, **caractérisé en ce que** le module de source lumineuse (1) présente des moyens (5', 6' ; 5", 6") disposés sur un élément de support (5) pour le montage amovible dans le projecteur (2) du véhicule.

7. Module de source lumineuse (1) selon la revendication 6, **caractérisé en ce que** les moyens de montage amovible comprennent des moyens de référence (5', 6' ; 5", 6") pour référencer le module de source lumineuse (1) et/ou la source de lumière laser (3) dans un projecteur de véhicule (2), en particulier un réflecteur (6) d'un projecteur de véhicule (2).

8. Module de source lumineuse (1) selon la revendication 7, **caractérisé en ce que** les moyens de référence sont conçus comme des moyens de guidage coopérant avec des moyens de réception de guidage correspondants dans un projecteur de véhicule (2), en particulier un réflecteur (6) d'un projecteur de véhicule (2).

9. Module de source lumineuse (1) selon la revendication 7 ou 8, **caractérisé en ce que** les moyens de référence sont conçus comme au moins une broche de positionnement et au moins un trou de montage, la broche de positionnement étant disposée sur la source lumineuse laser (3) et/ou l'élément de support (5) et le trou de montage étant disposé sur un phare de véhicule (2), ou vice versa.

10. Module de source lumineuse (1) selon l'une des revendications 1 à 9, **caractérisé en ce que** l'élément porteur (5) est constitué d'un matériau conducteur de la chaleur et/ou au moins partiellement d'un matériau transparent.

11. Module de source lumineuse (1) selon l'une des revendications 1 à 10, **caractérisé en ce que** l'élément lumineux (4) est disposé dans un élément optique (9), de préférence dans un trou borgne (10) ou dans une cavité, de préférence sur un élément de support (5), au moins une couche de réflexion (8) réfléchissant la lumière en direction de la source de lumière laser (3) et/ou au moins une couche d'absorption opaque (12) étant associées à l'élément optique (9) au moins sur un côté éloigné de la source de lumière laser (3).

12. Module de source de lumière (1) selon l'une des revendications 1 à 11, **caractérisé en ce que** la source de lumière laser (3) est reliée à au moins un élément de refroidissement (15) disposé sur un élément porteur (5), qui est conçu en particulier comme un dissipateur thermique et/ou un dispositif de ventilation.

13. Module de source lumineuse (1) selon l'une des revendications 1 à 12, **caractérisé en ce que** le module de source lumineuse (1) présente au moins un dispositif de commutation de sécurité qui empêche l'activation du module de source lumineuse (1) ou de la source de lumière laser (3) du module de source lumineuse (1) avant que le module de source lumineuse (1) ne soit monté dans un phare de véhicule (2).

14. Projecteur de véhicule (2) comportant au moins un module de source lumineuse (1) selon l'une des revendications 1 à 13.

15. Projecteur de véhicule (2) selon la revendication 14, **caractérisé en ce qu'**il est prévu au moins un réflecteur (6) ou un adaptateur de réflecteur avec au moins un logement pour le module de source lumineuse (1).
